# EUROPEAN PATENT APPLICATION

(11) **EP 4 332 847 A1**
(43) Date of publication of application: **06.03.2024**
(21) Application number: 22940957.8
(22) Date of filing: 11.05.2022
(51) Int. Cl.: G06N 20/00

(54) **COUPLED LEARNER FORMATION DEVICE, COUPLED LEARNER FORMATION PROGRAM, AND NON-TRANSITORY RECORDING MEDIUM WITH A COUPLED LEARNER FORMATION PROGRAM RECORDED THEREIN**

(71) Applicant: Aizoth Inc., Tsukuba-shi, Ibaraki 305-0031 (JP)
(72) Inventor: KAWAJIRI Kotaro, Tsukuba-shi, Ibaraki 305-0031 (JP)
(74) Representative: Gille Hrabal Partnerschaftsgesellschaft mbB Patentanwälte
(86) International application number: PCT/JP2022/019922
(87) International publication number: WO 2023/218553

(57) **Abstract**

In a learner DB 24, trained learners trained by a user of a combined learner forming service are registered. A combined learner forming unit 28 combines a plurality of trained learners selected by the user among trained learners registered in the learner DB 24 according to an instruction of the user to form a combined learner 40. The combined learner 40 can include a trained learner trained by a person other than the user.

## Description

### TECHNICAL FIELD

The present invention relates to a combined learner forming apparatus, a combined learner forming program, and a non-transitory recording medium storing a combined learner forming program.

### BACKGROUND

Patent Document 1 discloses a learning model construction device that converts into a learning model a production system that predicts a state of a prediction target according to a rule. The learning model construction device forms a third learning model simulating the production system by combining a first trained model trained based on input data for construction that is an input of the production system and ignition rule information defining an ignition rule of the production system, and a second trained model trained based on the ignition rule and a production output that is an output of the production system for the input data for construction.

### CITATION LIST

### PATENT LITERATURE

Patent Document 1: JP 2021 -89655 A

### SUMMARY

### TECHNICAL PROBLEM

Incidentally, in a case where a user can freely combine a plurality of trained learners including a trained learner trained by the user or a person other than the user, it is possible to expect an effect that a range of utilization of an existing trained learner is expanded, or an effect that a target process can be performed using a plurality of existing trained learners (trained by another person) without causing the user to cause a learner to newly learn. However, conventionally, a system in which a user can use a plurality of trained learners in combination has not been proposed.

An object of a combined learner forming apparatus disclosed in the present specification is to enable a user to freely combine a plurality of trained learners.

### SOLUTION TO PROBLEM

A combined learner forming apparatus disclosed in the present specification can access a trained learner group and includes a combined learner forming unit that selects a plurality of trained learners from the trained learner group according to an instruction of a user and combines the plurality of selected trained learners to form a combined learner.

The combined learner forming unit forms the combined learner by combining the plurality of trained learners including a learner trained by a person other than the user.

The combined learner may include the plurality of trained learners that perform processing using different algorithms.

The combined learner forming unit may form a new combined learner by combining the combined learner and a trained learner selected by the user.

The combined learner forming unit may form the combined learner in which a first learner that is one of the plurality of trained learners and a second learner that is one of the plurality of trained learners and is different from the first learner are connected such that output data of the first learner is directly or indirectly input to the second learner.

The first learner may output a plurality of pieces of output data, a part of the plurality of pieces of output data of the first learner may be directly or indirectly input to the second learner, and another part of the plurality of pieces of output data of the first learner may be output data of the combined learner.

The second learner may output a plurality of pieces of output data, and a part of the plurality of pieces of output data of the second learner may be fed back and input to the first learner.

The combined learner forming unit may form the combined learner including a transformation model that transforms output data of the first learner and is connected to the second learner such that the transformed output data is input to the second learner.

The combined learner forming apparatus may further include a display control unit that causes a display to display a combined learner formation interface capable of determining a combined structure of the combined learner by combining learner icons corresponding to the plurality of trained learners, and the combined learner forming unit may determine the combined structure of the combined learner according to an operation of the user on the combined learner formation interface.

The display control unit may display a warning on the combined learner formation interface in a case where input data is not input to at least one of inputs of the trained learners included in the combined learner.

The combined learner forming apparatus may further include a display control unit that causes a display to display an input interface for inputting an input name of each of inputs of the plurality of trained learners and an output name of each of outputs of the plurality of trained learners. In a case where an output name of an output of the first learner input by the user corresponds to an input name of an input of the second learner input by the user, the combined learner forming unit may connect the output of the first learner and the input of the second learner.

The combined learner forming apparatus may further include an information providing unit that provides the user with at least one of attribute information regarding the trained learners acquired from a person who has caused the trained learners to learn and learning data information regarding learning data obtained when the trained learners have been caused to learn.

The attribute information includes at least one of information regarding preprocessing to be performed on the input data before the input data is input to the trained learners, a program language used for development of the trained learners, and a library used for the development of the trained learners.

The combined learner forming apparatus may further include an analysis unit that performs analysis relating to the combined learner, and the analysis may be performed such that learning processing of each of the trained learners included in the combined learner does not need to be re-executed.

The analysis unit may execute at least one of sensitivity analysis for analyzing an effect of each of a plurality of pieces of input data of the combined learner on output data of the combined learner, input optimization processing for searching for input data of the combined learner by a genetic algorithm to obtain optimum output data of the combined learner for the user, and output range search processing for searching for a possible range of the output data of the combined learner based on a plurality of pieces of input data in a predetermined range by Monte Carlo simulation.

A combined learner forming program disclosed in this specification causes a computer that can access a trained learner group to function as a combined learner forming unit that selects a plurality of trained learners from the trained learner group according to an instruction of a user and combines the plurality of selected trained learner to form a combined learner.

Furthermore, a recording medium disclosed in the present specification is a non-transitory computer-readable recording medium storing a combined learner forming program for causing a computer that can access a trained learner group to function as a combined learner forming unit that selects a plurality of trained learners from the trained learner group according to an instruction of a user and combines the plurality of selected trained learners to form a combined learner.

### ADVANTAGEOUS EFFECTS OF INVENTION

According to the combined learner forming apparatus disclosed in the present specification, a user can freely combine a plurality of trained learners.

### BRIEF DESCRIPTION OF DRAWINGS

FIG. 1 is a schematic configuration diagram of a combined learner forming system according to the present embodiment.
FIG. 2 is a schematic configuration diagram of a combined learner forming apparatus according to the present embodiment.
FIG. 3 is a conceptual diagram illustrating a first example of a combined learner.
FIG. 4 is a conceptual diagram illustrating a second example of the combined learner.
FIG. 5 is a conceptual diagram illustrating a third example of the combined learner.
FIG. 6 is a conceptual diagram illustrating a fourth example of the combined learner.
FIG. 7 is a diagram illustrating an example of a combined learner formation interface.
FIG. 8 is a diagram illustrating an example of display of a warning regarding an input error.
FIG. 9 is a diagram illustrating an example of an input/output name input interface.
FIG. 10 is a diagram illustrating an example of display of attribute information of a trained learner.
FIG. 11 is a diagram illustrating an example of display of learning data information of the trained learner.
FIG. 12 is a diagram illustrating an input data set and an output data set.
FIG. 13 is a diagram illustrating a changed input data set and a changed output data set.
FIG. 14 is a diagram illustrating a total value of absolute values of differences for each piece of output data for each piece of input data.
FIG. 15 is a diagram illustrating a contribution for each piece of input data of each piece of output data.
FIG. 16 is a flowchart illustrating a procedure of processing of a genetic algorithm.
FIG. 17 is a diagram illustrating an example of display of a result of sensitivity analysis.
FIG. 18 is a diagram illustrating an example of display of a result of input optimization.
FIG. 19 is a diagram illustrating an example of display of a result of an output range search.

### DESCRIPTION OF EMBODIMENTS

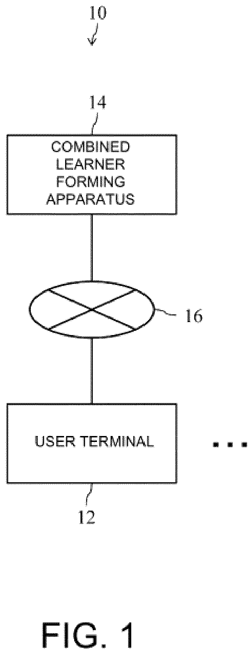

FIG. 1 is a schematic configuration diagram of a combined learner forming system 10 according to the present embodiment. The combined learner forming system 10 includes one or a plurality of user terminals 12 used by one or a plurality of users of the combined learner forming system 10 (that is, a combined learner forming service to be described later) and a combined learner forming apparatus 14. The user terminal 12 and the combined learner forming apparatus 14 are communicably connected via a communication line 16 such as a local area network (LAN) or the Internet.

The user terminal 12 includes, for example, a computer such as a personal computer, a tablet terminal, or a smartphone, but is not limited to these devices. The user terminal 12 includes a communication interface for communicating with the combined learner forming apparatus 14 via the communication line 16, an input interface for receiving a command of the user, a display for displaying a screen or the like provided from the combined learner forming apparatus 14, a memory for storing data, a processor for executing each processing, and the like.

Although in the present embodiment the combined learner forming apparatus 14 is a server computer, the combined learner forming apparatus 14 may be any apparatus so long as functions described below can be implemented (in other words, so long as the combined learner forming service described below can be provided). For example, the combined learner forming apparatus 14 may be a computer (such as a personal computer) that operates stand-alone. Furthermore, the functions of the combined learner forming apparatus 14 described below may be implemented by cooperation of a plurality of computers.

The combined learner forming apparatus 14 is an apparatus that provides the combined learner forming service to the user. The user may be a user who has already been registered with the combined learner forming service, but the combined learner forming service may be available without requiring the registration of the user. As will be described in detail later, the combined learner forming service is a service in which the user can select a plurality of trained learners and freely combine the selected trained learners to form a combined learner. The trained learners that can be selected by the user (in other words, the trained learners included in the combined learner) include not only a learner on which the user has performed learning processing but also a learner trained by a person other than the user.

In the present embodiment, each user of the combined learner forming service can register a trained learner trained by the user with the combined learner forming service. As a result, the user can allow another person to use his/her own trained learners, and other users other than the user can select the trained learners of the user to form a combined learner. Note that registering the trained learners with the combined learner forming service includes storing and registering the trained learners in the combined learner forming apparatus 14, and also includes storing the trained learners in a computer managed by each user and then registering the trained learners in a state where the trained learners are accessible from the combined learner forming apparatus 14. The combined learner forming apparatus 14 can access a trained learner group trained by each user.

The combined learner forming service may have a function of assisting the user in forming a learner and analyzing a trained learner. For example, the combined learner forming service may have a function of suggesting to the user an appropriate hyperparameter (the number of epochs, the number of hidden layers, the number of hidden layer neurons, the number of dropouts, the number of batches, or the like) of a learner using a genetic algorithm or the like. Alternatively, as will be described in detail later, the combined learner forming service may have a function of performing sensitivity analysis, input optimization processing, output range search processing, and the like on the trained learners. These functions facilitate registration of a trained learner with the combined learner forming service, and allow the user to select trained learners for forming a combined learner from a larger number of trained learners.

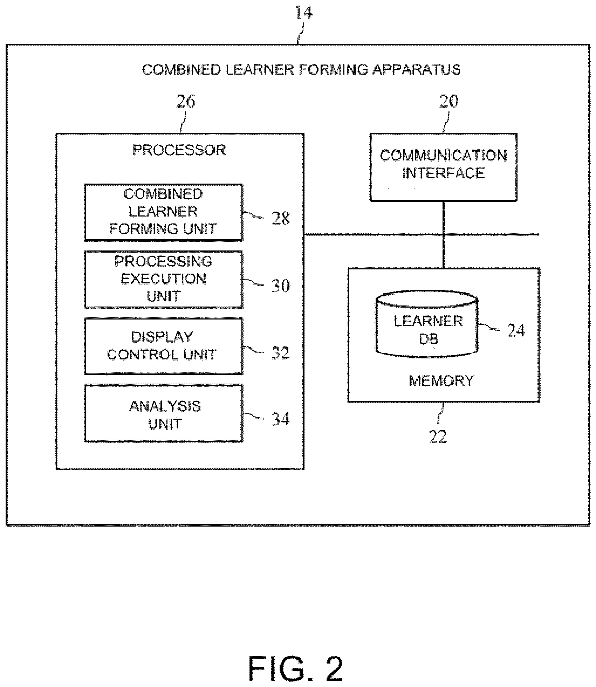

FIG. 2 is a schematic configuration diagram of the combined learner forming apparatus 14 according to the present embodiment.

A communication interface 20 includes, for example, a network interface card (NIC). The communication interface 20 implements a function of communicating with other devices, particularly the user terminal 12.

A memory 22 includes, for example, a hard disk drive (HHD), a solid state drive (SSD), a read only memory (ROM), a random access memory (RAM), or the like. The memory 22 may be provided separately from a processor 26 to be described later, or at least a part of the memory 22 may be provided in the processor 26. The memory 22 stores a combined learner forming program for operating each unit of the combined learner forming apparatus 14. The combined learner forming program can be stored in a non-transitory recording medium readable by the computer (the combined learner forming apparatus 14 in the present embodiment). In that case, the combined learner forming apparatus 14 can read the combined learner forming program from the recording medium and execute the combined learner forming program.

In addition, as illustrated in FIG. 2, a learner database (DB) 24 is stored in the memory 22. In the learner DB 24, a trained learner trained by the user of the combined learner forming service is registered. Specifically, the learner DB 24 stores a user ID for identifying the user and the trained learner registered by the user in association with each other. Note that the entity of the trained learner is a program that defines the structure of the trained learner, various parameters relating to the trained learner, a processing execution program for performing processing on input data, and the like. Therefore, storing the trained learner in the learner DB 24 means that the program and the various parameters are stored in the learner DB 24.

As described above, the trained learner registered by the user with the combined learner forming service may be stored in the computer managed by the user. In this case, instead of the trained learner, an access destination (for example, a uniform resource locator (URL)) of the trained learner stored in the user's computer is registered in the learner DB 24. Information of the access destination is provided from the user when the user registers the trained learner.

Since the user can freely form and train a learner, a trained learner group that performs processing with various algorithms can be registered in the learner DB 24. For example, in the learner DB 24, a trained learner group that performs processing with an algorithm such as a neural network, a convolutional neural network, a recurrent neural network, a support vector machine, logistic regression, or random forest can be registered. In addition, in the learner DB 24, there can be registered a trained learner group in which the numbers of pieces of input data (in other words, the numbers of elements of input vectors) are different from each other or the numbers of pieces of output data (in other words, the numbers of elements of output vectors) are different from each other even in trained learners that perform processing with the same algorithm.

Furthermore, a trained learner group registered in the learner DB 24 may be trained by various learning methods. For example, a trained learner group trained by various methods such as supervised learning, unsupervised learning, or reinforcement learning can be registered in the learner DB 24. Furthermore, among the trained learners registered in the learner DB 24, a trained learner trained by using learning data may be a trained learner trained by using various learning data so as to be used for various purposes.

In the learner DB 24, attribute information regarding the trained learner or learning data information regarding learning data obtained when the trained learner is trained is preferably stored in association with the user ID and the trained learner (or an access destination of the trained learner). The attribute information and the learning data information are provided from the user who has trained the trained learner and are stored in the learner DB 24. Details of the attribute information and the learning data information will be described later.

Further, in the learner DB 24, a combined learner formed according to an instruction of the user is stored in association with the user ID.

The processor 26 includes at least one of a general-purpose processing device (for example, a central processing unit (CPU)) and a dedicated processing device (for example, an application specific integrated circuit (ASIC), a field programmable gate array (FPGA), a programmable logic device, or the like). The processor 26 may be configured by cooperation of a plurality of processing devices present at physically separated positions, instead of one processing device. As illustrated in FIG. 2, the processor 26 implements functions as a combined learner forming unit 28, a processing execution unit 30, a display control unit 32, and an analysis unit 34 by the combined learner forming program stored in the memory 22.

The combined learner forming unit 28 selects a plurality of trained learners from a trained learner group registered in the learner DB 24 according to an instruction of the user, and combines the plurality of selected trained learners to form a combined learner.

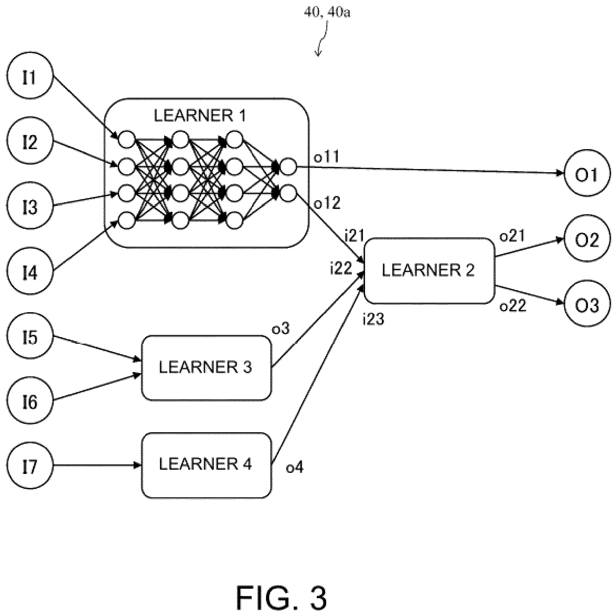

FIG. 3 is a conceptual diagram of a combined learner 40. When the user logs in to the combined learner forming service (that is, the combined learner forming apparatus 14) from the user terminal 12, selects a plurality of trained learners from the learner DB 24, and instructs how to combine the learners, the combined learner forming unit 28 forms the combined learner 40 by combining the plurality of selected trained learners. Four learners, which are a learner 1, a learner 2, a learner 3, and a learner 4, are selected by the user and are combined to form a combined learner 40a illustrated in FIG. 3. Note that the combined learner 40 may include a plurality of identical trained learners. For example, two learners 1 may be included in the combined learner 40a.

In this case, at least one of the plurality of trained learners selected by the user may be a trained learner trained by a person other than the user who has selected the plurality of trained learners. That is, the user can form the combined learner 40 by using the trained learner trained by the other person for some purpose. Furthermore, the plurality of trained learners selected by the user may be all trained learners trained by the user.

As described above, a trained learner group that performs processing with various algorithms can be registered in the learner DB 24. Therefore, the combined learner 40 can include a plurality of trained learners that perform processing using different algorithms. For example, in the combined learner 40a, each of the learners 1 and 2 may be a neural network model that performs processing by a neural network, the learner 3 may be a random forest model that performs processing by a random forest, and the learner 4 may be a Gaussian regression model that performs processing by Gaussian regression.

The user can also freely select a method for combining a plurality of trained learners. Specifically, the user can designate connection destinations of each input and each output of each trained learner selected by the user.

Furthermore, the user can instruct the numbers of pieces of input data and output data of the combined learner 40, an input destination of each piece of the input data, and each piece of the output data of the combined learner 40. In response to the instruction, the combined learner forming unit 28 determines the number of pieces of input data and the number of pieces of output data of the combined learner 40, an input destination of each piece of the input data, and each piece of the output data of the combined learner 40. For example, in the combined learner 40a illustrated in FIG. 3, the number of pieces of input data is seven (represented by I1 to 17), and the number of pieces of output data is three (represented by O1 to O3). In addition, input destinations of the input data I1 to I4 are the learner 1, input destinations of the input data I5 and I6 are the learner 3, and an input destination of the input data I7 is the learner 4. In addition, the output data O1 is output data o11 which is one of pieces of output data of the learner 1, and the output data O2 to O3 are output data o21 and o22 of the learner 2.

As described above, combining the plurality of trained learners to form the combined learner 40 means determining connection destinations of inputs and outputs of the plurality of trained learners, connection destinations (input destinations) of input data of the combined learner 40, and output data of the combined learner 40. Note that, in a case where a trained learner has a plurality of inputs, and an input that is among the plurality of inputs and to which input data is not input is present, output data of the trained learner becomes an error. Therefore, it is necessary to connect the input data of the combined learner 40 or the output of another trained learner to all the inputs of the trained learners included in the combined learner 40. On the other hand, in a case where a trained learner has a plurality of outputs, not all of the plurality of outputs need to be connected to the output data of the combined learner 40 or the input of another trained learner. That is, output data that is not used among a plurality of pieces of output data of the trained learner may be present.

In particular, the combined learner forming unit 28 can form the combined learner 40 in which a first learner and a second learner are connected such that output data of the first learner, which is one of the plurality of trained learners selected by the user, is directly or indirectly input to the second learner, which is one of the plurality of trained learners and is different from the first learner, according to an instruction of the user. For example, in the combined learner 40a, the learner 1 and the learner 2 are connected such that output data o12 of the learner 1 as the first learner is directly input to the learner 2 as input data i21 of the learner 2 as the second learner. In the present specification, connecting the learner 1 and the learner 2 as described above will be described as "connecting the learner 2 after the learner 1" or "connecting the learner 1 before the learner 2". Note that, in the combined learner 40a, only the learner 2 is connected after the learner 1, but one or more other trained learners may be further connected after the learner 2.

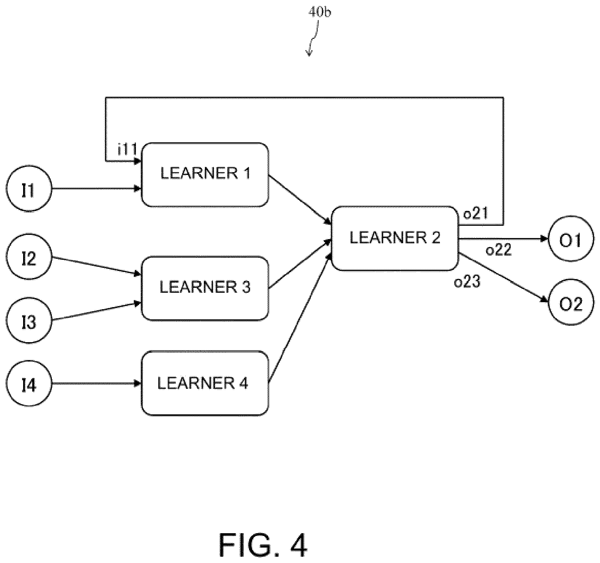

Furthermore, in a case where the second learner connected after the first learner outputs a plurality of pieces of output data, the combined learner forming unit 28 can form the combined learner 40 in which a part of the plurality of pieces of output data of the second learner is fed back and input to the first learner according to an instruction of the user. For example, in a combined learner 40b illustrated in FIG. 4, a learner 2 as the second learner outputs a plurality of pieces of output data o21, o22, and o23, and the output data o21 among them is fed back and input to a learner 1 as input data i11 of the learner 1 as the first learner. Note that an appropriate value may be input as the initial value of the input data i 11 that is a feedback input. In addition, in the combined learner 40b including the feedback input, output data O1 and O2 may not be stable for a while after the input data I1 to I4 are input, due to the feedback input. In that case, the output data O1 and O2 after the output data O1 and O2 become stable may be used as output data of the combined learner 40b.

Furthermore, in a case where the first learner connected before the second learner outputs a plurality of pieces of output data, the combined learner forming unit 28 can directly or indirectly input a part of the plurality of pieces of output data of the first learner to the second learner according to an instruction of the user, and can set another part of the plurality of pieces of output data of the first learner as the output data of the combined learner 40. For example, in the combined learner 40a illustrated in FIG. 3, the learner 1 as the first learner outputs the plurality of pieces of output data o11 and o12, and the output data o12 of the output data is input to the learner 2 as input data i21 of the learner 2 as the second learner, and the output data o11 is output data O1 of the combined learner 40a.

When the second learner is connected after the first learner; that is, when the output data of the first learner is input to the second learner, there is a case where it is desired to transform the output data of the first learner and then input the transformed data to the second learner. For example, there is a case where it is desired to calculate a plurality of pieces of output data of the first learner and input the calculation results to the second learner.

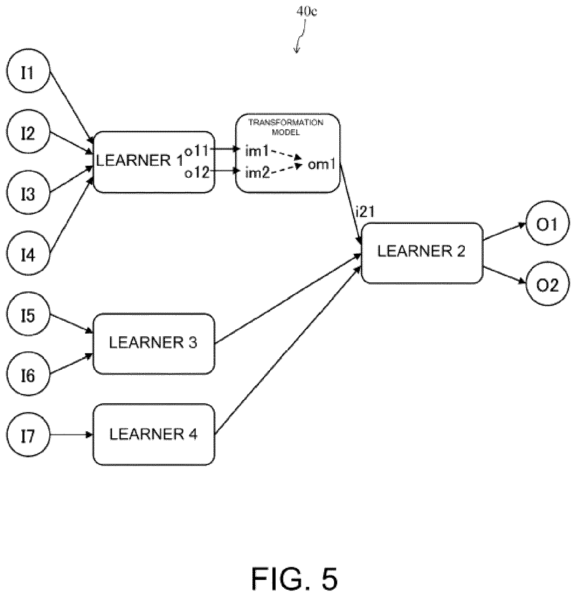

In view of this, it is preferable that the combined learner forming unit 28 be able to form a combined learner 40 including a transformation model that transforms the output data of the first learner according to an instruction of the user and is connected to the second learner so that the transformed output data is input to the second learner. For example, in a combined learner 40c illustrated in FIG. 5, a transformation model is connected before a learner 2 as the second learner after a learner 1 as the first learner. The transformation model is a model that uses two pieces of output data o11 and o12 of the learner 1 as input data im1 and im2 and transforms the input data im1 and im2 into output data om1. The output data om1 of the transformation model is input to the learner 2 as input data i21 of the learner 2. In this case, it can be said that the pieces of output data o11 and o12 of the learner 1 are indirectly input to the learner 2.

The transformation model may be user-creatable in the combined learner forming service. Alternatively, in the combined learner forming service, some transformation models may be prepared in advance, and the user may select a desired transformation model from among the transformation models.

The data format of the output data of the first learner may be inappropriate as the input data of the second learner. For example, the number of pieces of output data of the first learner may be different from the number of pieces of input data of the second learner, the scale of the output data of the first learner may be different from the scale of the input data of the second learner, or the output data of the first learner may include a blank (NaN (Not a Number)), but the second learner may not receive an input of NaN (an error occurs). Even in such a case, the transformation model can be used. That is, the transformation model can perform processing of transforming a plurality of pieces of output data of the first learner into a predetermined number of pieces of data, processing of transforming the scale of the output data of the first learner, processing of transforming NaN included in the output data of the first learner into data that can be received by the second learner, and the like.

As described above, the combined learner 40 formed by the combined learner forming unit 28 according to the instruction of the user is registered in the learner DB 24 in association with the user ID of the user. By registering the combined learner 40, the user can read and use the combined learner 40 from the learner DB 24 at any time.

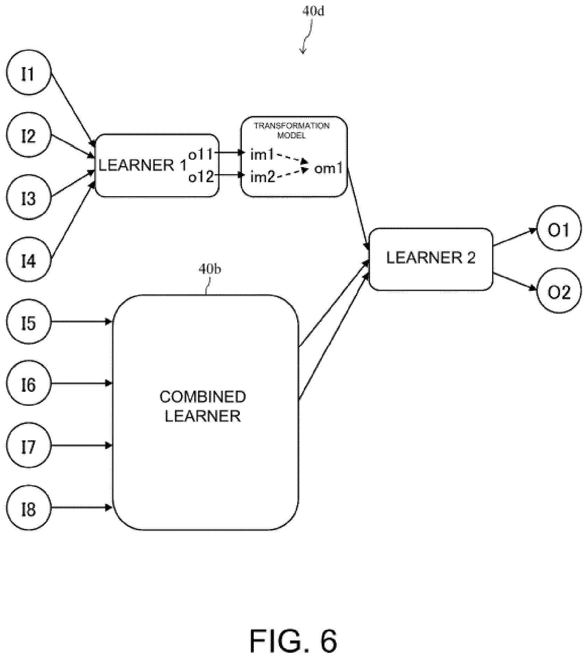

Furthermore, the user can use the combined learner 40 formed in the past and registered in the learner DB 24 as a trained learner constituting a new combined learner 40. In other words, the combined learner forming unit 28 can combine the combined learner 40 formed by the user in the past and registered in the learner DB 24 and a trained learner selected by the user from the learner DB 24 to form a new combined learner 40. For example, in a combined learner 40d illustrated in FIG. 6, the combined learner 40b (see FIG. 4) is connected before the learner 2.

Returning to FIG. 2, the processing execution unit 30 executes processing using the combined learner 40 formed by the combined learner forming unit 28. Specifically, when the user specifies the combined learner 40 and the input data thereof, the processing execution unit 30 inputs the input data to the combined learner 40. For example, it is assumed that the user designates the combined learner 40a illustrated in FIG. 3 and designates I1 to I7 as the input data. In this case, the processing execution unit 30 first inputs the designated input data I1 to I4 to the learner 1, inputs the input data I5 and I6 to the learner 3, and inputs the input data I7 to the learner 4 according to the structure of the combined learner 40a. Next, the processing execution unit 30 sets output data o11 of the learner 1 for the input data I1 to I4 as output data O1 of the combined learner 40a, and inputs, to the learner 2, output data o12 of the learner 1 for the input data I1 to I4, output data o3 of the learner 3 for the input data I5 and 16, and output data o4 of the learner 4 for the input data I7 as input data i21, i22, and i23 of the learner 2. Finally, the processing execution unit 30 sets output data o21 and o22 of the learner 2 for the input data i21, i22, and i23 as output data O2 and O3 of the combined learner 40a. The processing execution unit 30 provides the output data O1 to O3 obtained in this manner to the user.

In this case, a trained learner included in the combined learner 40 may be stored not in the learner DB 24 but in a computer managed by a user who has trained the trained learner. In that case, the processing execution unit 30 transmits input data of the trained learner to the computer, and causes the computer to execute processing of the trained learner. Then, the processing execution unit 30 receives output data of the trained learner from the computer. For example, it is assumed that the learner 1 of the combined learner 40a is stored in a computer other than the combined learner forming apparatus 14. In this case, the processing execution unit 30 transmits the input data I1 to I4 to the computer. Then, the computer obtains output data o11 and o12 of the learner 1 for the input data I1 to I4, and transmits the output data o11 and o12 to the combined learner forming apparatus 14. The processing execution unit 30 inputs the received output data o11 to the learner 2 as output data O1 and inputs the output data o21 to the learner 2 as input data i21 of the learner 2.

The display control unit 32 displays a screen provided by the combined learner forming service on the display of the user terminal 12. In particular, the display control unit 32 causes the display of the user terminal 12 to display a combined learner formation interface which is a screen for the user to graphically form the combined learner 40.

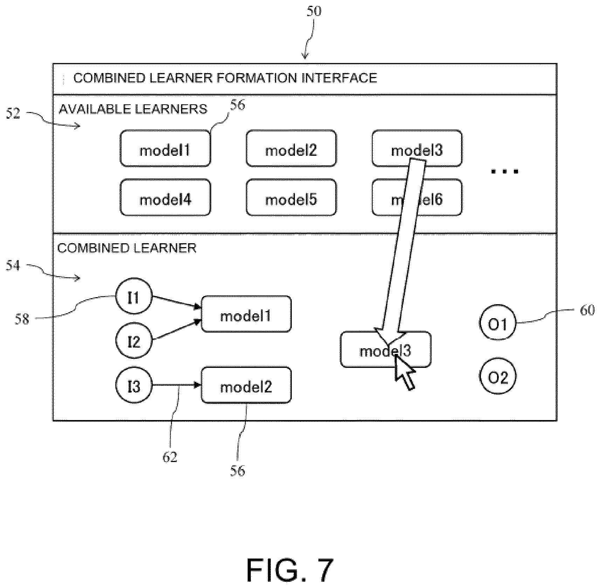

FIG. 7 is a diagram illustrating an example of a combined learner formation interface 50. The combined learner formation interface 50 illustrated in FIG. 7 includes a learner icon display area 52 and a combined learner display area 54. In the learner icon display area 52, the display control unit 32 displays learner icons 56 corresponding to the plurality of trained learners (that is, the trained learner group registered in the learner DB 24) that can be incorporated into the combined learner 40. Note that, in a case where the combined learner 40 formed in the past is registered in the learner DB 24, the display control unit 32 can display a learner icon 56 corresponding to the combined learner 40.

The user may determine the combined structure of the combined learner 40 by operating on the combined learner formation interface 50. In other words, the combined learner forming unit 28 determines the combined structure of the combined learner 40 according to the user's operation on the combined learner formation interface 50. For example, as illustrated in FIG. 7, the user drags and drops a learner icon 56 displayed in the learner icon display area 52 to the combined learner display area 54, so that a trained learner corresponding to the learner icon 56 can be incorporated into the combined learner 40.

Furthermore, in response to a predetermined operation by the user, the display control unit 32 displays, in the combined learner display area 54, one or more input data icons 58 corresponding to one or more pieces of input data of the combined learner 40, and one or more output data icons 60 corresponding to one or more pieces of output data of the combined learner 40. Further, the display control unit 32 displays the input data icon 58, an input or output of the learner icon 56, or an edge icon 62 connecting to the output data icon 60 according to a user's operation on the combined learner display area 54. The user can set the connection relationship among the input data icon 58, the input or output of the learner icon 56, and the output data icon 60 by the edge icon 62. The display control unit 32 may appropriately change the display positions of the input data icon 58, the learner icon 56, and the output data icon 60 according to a user's instruction so that the connection relationship can be easily seen in the combined learner display area 54.

The combined learner forming unit 28 forms the combined learner 40 based on the learner icon 56, the input data icon 58, the output data icon 60, and the edge icon 62 combined by the user in the combined learner display area 54.

As described above, the input data of the combiner learner 40 or the output of another trained learner needs to be connected to the input of each trained learner included in the combined learner 40. Therefore, the display control unit 32 may display a warning in the combined learner display area 54 when the input data is not input to at least one of the inputs of the trained learners included in the combined learner 40 (when there is an input error).

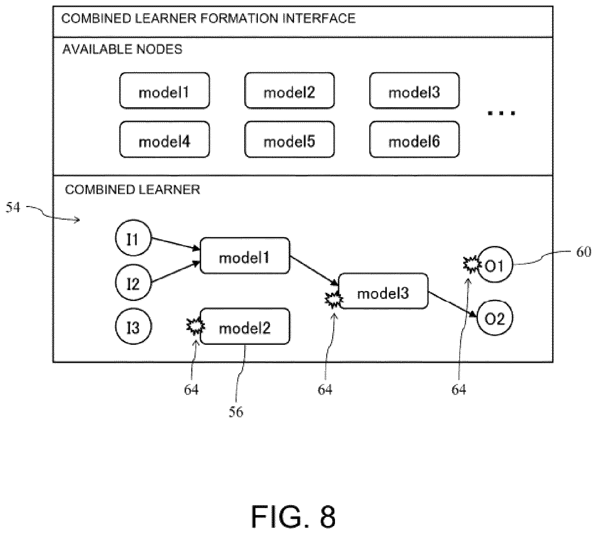

FIG. 8 is a diagram illustrating an example of display of the warning regarding the input error. In the example illustrated in FIG. 8, nothing is connected to the input of the learner icon 56 described as "model2" and the output data icon 60 described as "O1". Therefore, the display control unit 32 displays a warning icon 64 in the vicinity of the learner icon 56 and in the vicinity of the output data icon 60. In addition, it is assumed that the trained learner corresponding to the learner icon 56 described as "model3" has a plurality of inputs. In the example illustrated in FIG. 8, only one input is connected to the learner icon 56 described as "model3". Therefore, the display control unit 32 displays the warning icon 64 in the vicinity of the learner icon 56.

In addition, the display control unit 32 causes the display to display an input/output name input interface, which is a screen for inputting the input name of an input of each of a plurality of trained learners selected by the user and the output name of an output of each of the plurality of trained learners selected by the user.

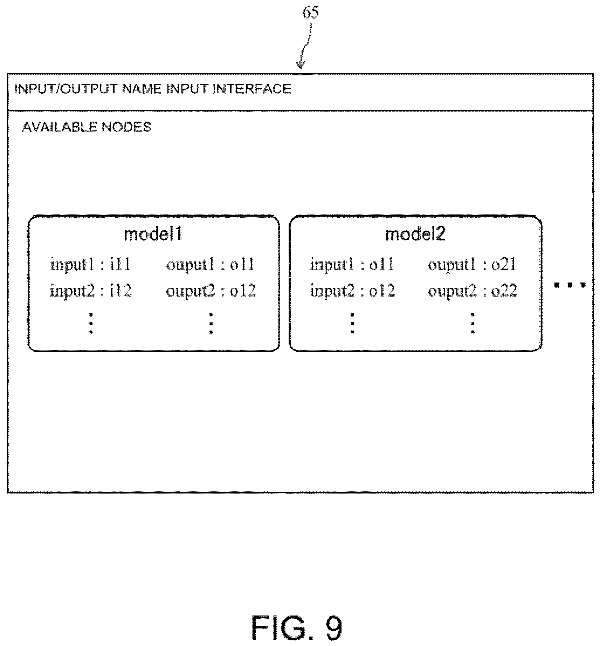

FIG. 9 is a diagram illustrating an example of an input/output name input interface 65. In the input/output name input interface 65, a list of input names and output names of a plurality of trained learners selected by the user is displayed. In the input/output name input interface 65, when the user selects an input of a certain trained learner, an input name of the input can be input. Furthermore, when the user selects an output of a certain trained learner, an output name of the output can be input. In a case where the trained learners have many inputs or outputs, the user may set a rule and be able to collectively input input names of a plurality of inputs or output names of a plurality of outputs according to the rule.

When the user inputs the input name and the output name of each trained learner in the input/output name input interface 65, the combined learner forming unit 28 may connect inputs and outputs of the plurality of trained learners based on the input name and the output name of each trained learner. Specifically, in a case where the output name of the output of the first learner corresponds to the input name of the input of the second learner, the combined learner forming unit 28 may connect the output of the first learner and the input of the second learner.

The case where the output name of the output of the first learner corresponds to the input name of the input of the second learner is, for example, a case where the output name of the output of the first learner and the input name of the input of the second learner are the same, but the present invention is not limited thereto. For example, in a case where the input name of each learner is represented by "i**" and the output name of each trained learner is represented by "o**", the input "i**" may correspond to the output "o**" in a case where portions of "**" are the same.

When the combined learner 40 is to be formed, the user may want to know attribute information of the trained learners to be incorporated in the combined learner 40. The attribute information of the trained learners is not limited thereto, and examples thereof include information regarding preprocessing to be performed on input data before the input data is input to the trained learners, a program language used for development of the trained learners, a library used for development of the trained learners, and the like. As described above, these pieces of attribute information are provided from the user who has caused the trained learners to learn, and are stored in the learner DB 24 in association with the trained learners.

Therefore, the display control unit 32 as an information providing unit may provide the user with the attribute information of the trained learners. In the present embodiment, the display control unit 32 provides the attribute information to the user by displaying the attribute information on the combined learner formation interface 50.

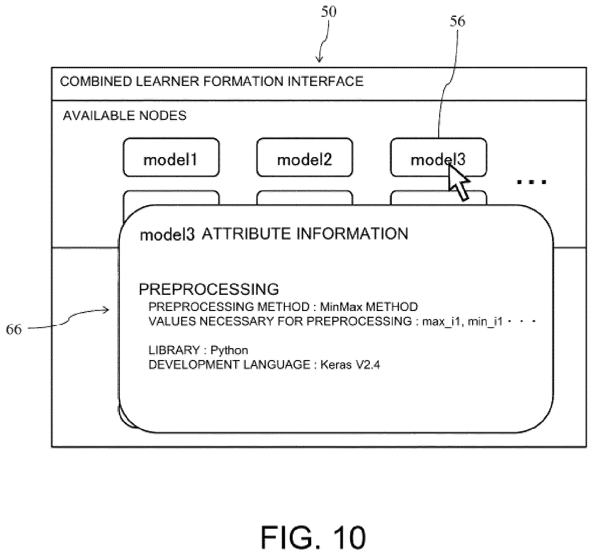

FIG. 10 is a diagram illustrating an example of display of attribute information of a trained learner. For example, when the user selects a learner icon 56 by positioning a mouse cursor on the learner icon 56 or the like, the display control unit 32 refers to the learner DB 24 and specifies attribute information associated with a trained learner corresponding to the selected learner icon 56. Then, specified attribute information 66 is displayed on the combined learner formation interface 50. As a result, the user can easily grasp the attribute information of the desired trained learner.

When the combined learner 40 is to be formed, the user may want to know learning data information regarding learning data used when the trained learner to be incorporated in the combined learner 40 is caused to learn. As described above, the learning data information is also provided from the user who has caused the trained learner to learn, and stored in the learner DB 24 in association with the trained learner.

Therefore, the display control unit 32 as an information providing unit may provide the learning data information of the trained learner to the user. In the present embodiment, similarly to the attribute information, the display control unit 32 provides the learning data information to the user by displaying the learning data information on the combined learner formation interface 50.

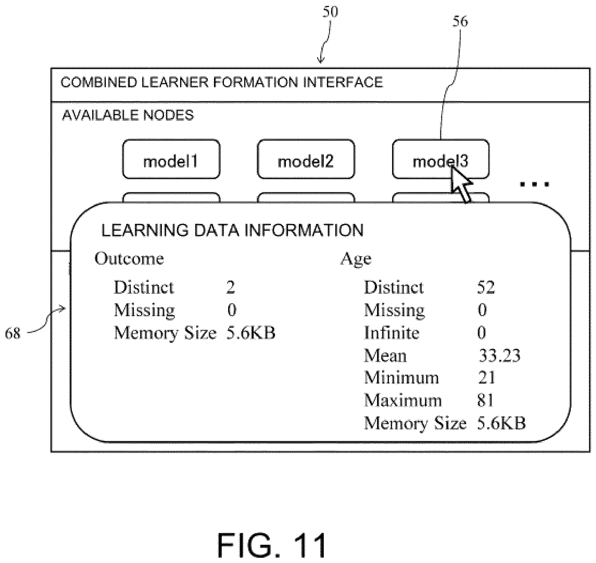

FIG. 11 is a diagram illustrating an example of the display of the learning data information of the trained learner. For example, when the user selects a learner icon 56 by positioning the mouse cursor on the learner icon 56 or the like, the display control unit 32 refers to the learner DB 24 and specifies learning data information associated with a trained learner corresponding to the selected learner icon 56. Then, the specified learning data information 68 is displayed on the combined learner formation interface 50. As a result, the user can easily grasp the learning data information of the desired trained learner.

Returning to FIG. 2, the analysis unit 34 executes processing of analyzing the combined learner 40 formed by the combined learner forming unit 28. Various contents of the analysis of the learner are present, and some analysis contents require relearning of the learner. For example, in a factor analysis of analyzing output data of a learner in a case where one of a plurality of pieces of input data input to the learner is not input, the learning data needs to be relearned in an environment where the input data is not input. Since the combined learner 40 can include a trained learner trained by a person other than the user, when the combined learner 40 is to be analyzed, it may not be appropriate for the user to arbitrarily perform relearning of the combined learner 40; that is, each trained learner included therein.

Therefore, the analysis unit 34 performs analysis on the combined learner and the analysis can be performed without re-executing the learning processing of each trained learner included in the combined learner 40. Examples of the analysis that can be performed without re-executing the learning processing of each trained learner included in the combined learner 40 include, but are not limited to, sensitivity analysis for analyzing an effect of each of a plurality of pieces of input data of the combined learner 40 on the output data of the combined learner 40, input optimization processing for searching for input data of the combined learner by a genetic algorithm to obtain optimum output data of the combined learner 40 for the user, and output range search processing for searching for a possible range of the output data of the combined learner 40 based on a plurality of pieces of input data in a predetermined range by Monte Carlo simulation.

Note that the analysis unit 34 can perform the above-described analysis not only on the combined learner 40 but also on the trained learners registered in the learner DB 24.

Hereinafter, each content of the analysis performed by the analysis unit 34 will be described. In this case, it is assumed that three pieces of input data I1 to I3 are input to the combined learner 40 to be analyzed and that two pieces of output data O1 and O2 are output.

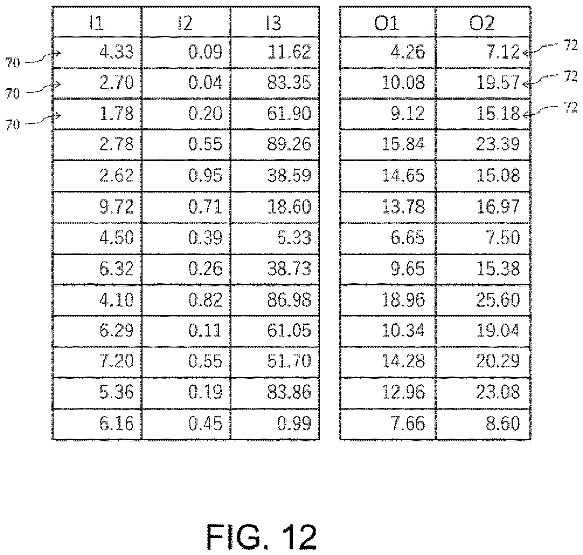

First, the sensitivity analysis will be described. In the sensitivity analysis, first, the analysis unit 34 prepares a plurality of sets of input data I1 to I3 (hereinafter referred to as "input data sets"), and acquires output data O1 and O2 (hereinafter referred to as "output data sets") when each set is input to the combined learner 40. As a result, as illustrated in FIG. 12, a plurality of combinations of input data sets 70 and output data sets 72 is acquired.

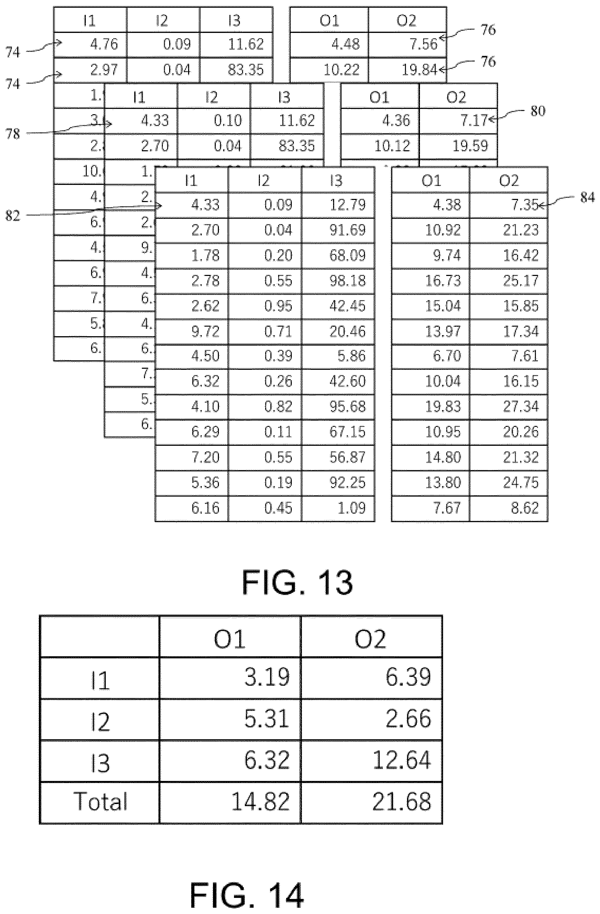

Next, as illustrated in FIG. 13, the analysis unit 34 generates a changed input data set 74 in which a value of one piece (that is, the input data I1, I2, or I3) of the input data of each of the input data sets is slightly changed. In this case, it is assumed that the input data I1 is slightly changed. Then, the changed input data set 74 including the input data I1 whose value has been changed is input to the combined learner 40, and a changed output data set 76 that is an output data set for the changed input data set is acquired. Then, the analysis unit 34 calculates a difference between the output data set 72 before the input data is changed and the changed output data set 76. Specifically, a difference between the output data O1 of the output data set 72 before the input data is changed and the output data O1 of the changed output data set 76 is calculated, and an absolute value (hereinafter, it is simply referred to as an "absolute value of difference") of a difference between the output data O2 of the output data set 72 and the output data O2 of the changed output data set 76 is calculated. The absolute value of the difference is an index indicating an effect (sensitivity) of the input data I1 on the output data of the combined learner 40. The analysis unit 34 holds the absolute value of the difference and the input data I1 in association with each other.

The analysis unit 34 repeats the processing as described above for each input data set 70. Furthermore, the analysis unit 34 changes the input data to be slightly changed and repeats the above-described processing. FIG. 13 illustrates a changed input data set 78 when the input data I2 is slightly changed, a changed output data set 80 for the changed input data set 78, a changed input data set 82 when the input data I3 is slightly changed, and a changed output data set 84 for the changed input data set 82.

By the above-described processing, it is possible to obtain statistical data of the absolute values of the differences for each of the output data O1 and O2 for the input data I1, I2, and 13. In the present embodiment, the analysis unit 34 calculates the total value of the absolute values of the differences for each of the output data O1 and O2 for each of the input data I1, I2, and I3. An example of the calculation results is illustrated in FIG. 14. In the calculation results, it can be said that the greater the value, the greater the effect of the input data on the output data; in other words, the greater the sensitivity. For example, referring to the output data O1 in FIG. 14, since the total value of the absolute values of the differences of the input data I1 is "3.19" and the total value of the absolute values of the differences of the input data I3 is "6.32", it can be said that the input data I3 has a larger effect on the output data O3 than the input data I1.

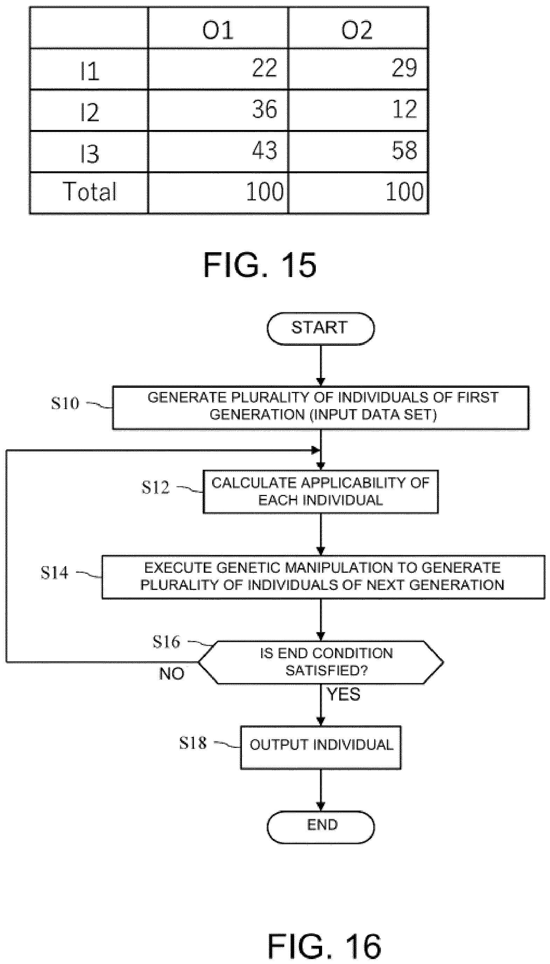

The analysis unit 34 may normalize the absolute values of the differences such that the sum of the values of the input data I1, I2, and I3 becomes 100 for each of the output data O1 and O2. The normalized values can be taken as contributions. FIG. 15 illustrates the contribution of each of the input data I1, I2, and I3 to each of the output data O1 and O2 obtained by the normalization.

Note that, in the example of the sensitivity analysis described above, the analysis unit 34 calculates the absolute values of the differences between the output data sets 72 before the input data is changed and the changed output data sets 76, but the sensitivity of each input data may be individually calculated separately for a case where the difference is a positive value and a case where the difference is a negative value.

Next, the input optimization processing will be described. In the present embodiment, the analysis unit 34 executes the input optimization processing using a genetic algorithm. Before executing the genetic algorithm, the analysis unit 34 acquires, from the user, output data (hereinafter, referred to as "ideal output data") of the combined learner 40 desired by the user. Note that the input optimization processing means processing of searching for optimum input data (that is, input data from which the ideal output data can be obtained), and the optimum input data is not necessarily obtained by the input optimization processing.

FIG. 16 is a flowchart illustrating a procedure of the processing of the genetic algorithm. First, in step S10, the analysis unit 34 generates a plurality of "individuals" of the first generation. In the present embodiment, each of the "individuals" is an input data set including a plurality of pieces of input data I1, I2, and I3. Each of the pieces of input data I1, I2, and I3 included in the individual is called a "gene". The input data sets as the individuals may be randomly generated. That is, values of the input data I1, I2, and I3 included in each input data set may be randomly set.

In step S12, the analysis unit 34 calculates "applicability" for each individual of the first generation. The applicability is an index indicating how close the individual is to an ideal solution (the ideal output data in the present embodiment). In the present embodiment, a difference (more specifically, a difference between output data O1 of an output data set and output data O1 of the ideal output data, and a difference between output data O2 of the output data set and output data O2 of the ideal output data) between the output data set and the ideal output data when the input data set as the individual is input to the combined learner 40 is calculated as the applicability.

In step S14, the analysis unit 34 executes genetic manipulation for manipulating genes (that is, the input data I1, I2, and I3) of the plurality of individuals of the first generation based on the calculated applicability of each individual. Examples of the genetic manipulation include "selection" of selecting an individual according to fitness, "crossover" of exchanging genes between a plurality of individuals, and "mutation" of changing some genes of an individual. Such genetic manipulation is expected to generate an individual having higher applicability than the previous generation. The plurality of genetically manipulated individuals become a plurality of individuals of the next generation (in this case, the second generation).

In step S16, the analysis unit 34 determines whether a predetermined end condition is satisfied. The end condition may be, for example, that a specific generation number has been reached, that an average value of fitness of a plurality of individuals of current generation is a predetermined value or more, or the like, and is set in advance by the user or the like. When the end condition is not satisfied, the process returns to step S12. In step S12 again, the analysis unit 34 calculates the applicability of each individual of the current generation (in this case, the second generation). In step S14 again, the analysis unit 34 executes genetic manipulation on the plurality of individuals of the second generation based on the calculated applicability of each individual to generate a plurality of individuals of the third generation. Such processing of steps S12 and S14 is repeated until the end condition is satisfied.

In a case where it is determined in step S16 that the end condition is satisfied, the processing proceeds to step S18. In step S18, the analysis unit 34 selects one or more individuals from among the plurality of individuals of the current generation, and outputs the one or more individuals as a result of the input optimization processing by the genetic algorithm.

Finally, the output range search processing will be described. In the present embodiment, the analysis unit 34 executes the output range search processing by Monte Carlo simulation. Specifically, first, the analysis unit 34 receives designation of the maximum value and the minimum value of each of the input data I1, I2, and I3 from the user. Then, the analysis unit 34 randomly generates a plurality of (enormous number of) input data sets within the designated range received from the user, inputs each of the input data sets to the combined learner 40, and acquires an output data set for each of the input data sets. The analysis unit 34 searches for a range of possible numerical values of the output data O1 and O2 based on the plurality of (enormous number of) output data sets acquired in this manner.

The display control unit 32 causes the display of the user terminal 12 to display a result of the analysis by the analysis unit 34.

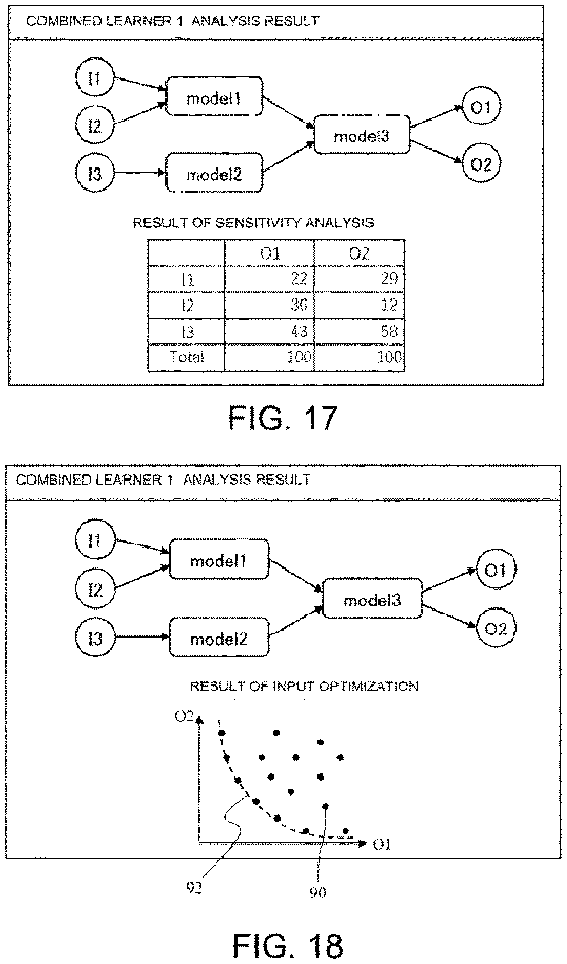

FIG. 17 is a diagram illustrating an example of the display of the result of the sensitivity analysis. In the example illustrated in FIG. 17, the contribution (see FIG. 15) of each of the input data I1, I2, and I3 to each of the output data O1 and O2 is illustrated as a result of the sensitivity analysis.

FIG. 18 is a diagram illustrating an example of display of a result of the input optimization processing. In the example illustrated in FIG. 18, as a result of the input optimization processing, a graph including a plot 90 corresponding to the input data set with the horizontal axis representing the output data O1 and the vertical axis representing the output data O2 is illustrated. In the example illustrated in FIG. 18, input optimization processing in a case where it is better that both the output data O1 and O2 are small, and a possible position of the plot 90 of ideal input data is represented by a curve 92 on the graph.

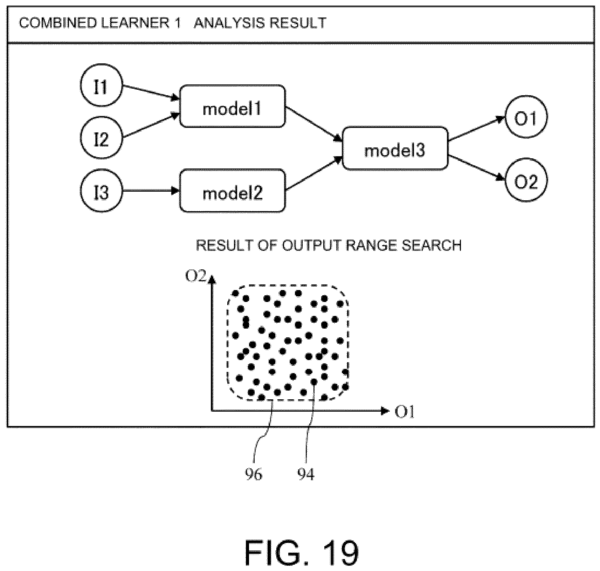

FIG. 19 is a diagram illustrating an example of display of a result of the output range search processing. In the example illustrated in FIG. 19, as a result of the output range search processing, a graph including a plot 94 representing an output data set obtained by Monte Carlo simulation with the horizontal axis representing the output data O1 and the vertical axis representing the output data O2 is illustrated. In the graph, a frame 96 representing a possible range of the output data O1 and O2 calculated by the analysis unit 34 is illustrated.

Although the embodiment according to the present invention has been described above, the present invention is not limited to the above embodiment, and various modifications can be made without departing from the gist of the present invention.

### REFERENCE SIGNS LIST

- 10: Combined learner forming system
- 12: User terminal
- 14: Combined learner forming apparatus
- 16: Communication line
- 20: Communication interface
- 22: Memory
- 24: Learner DB
- 26: Processor
- 28: Combined learner forming unit
- 30: Processing execution unit
- 32: Display control unit
- 34: Analysis unit
- 40, 40a, 40b, 40c, 40d: Combined learner
- 50: Combined learner formation interface
- 52: Learner icon display area
- 54: Combined learner display area
- 56: Learner icon
- 58: Input data icon
- 60: Output data icon
- 62: Edge icon
- 64: Warning icon
- 65: Input/output name input interface
- 66: Attribute information
- 68: Learning data information
- 70: Input data set
- 72: Output data set
- 74, 78, 82: Changed input data set
- 76, 80, 84: Changed output data set
- 90, 94: Plot
- 92: Curve
- 96: Frame

## Claims

1. A combined learner forming apparatus capable of accessing a trained learner group, the combined learner forming apparatus comprising
a combined learner forming unit that selects a plurality of trained learners from the trained learner group according to an instruction of a user and combines the plurality of selected trained learners to form a combined learner.

2. The combined learner forming apparatus according to claim 1, wherein
the combined learner forming unit forms the combined learner by combining the plurality of trained learners including a learner trained by a person other than the user.

3. The combined learner forming apparatus according to claim 1 or 2, wherein
the combined learner includes the plurality of trained learners that perform processing using different algorithms.

4. The combined learner forming apparatus according to any one of claims 1 to 3, wherein
the combined learner forming unit forms a new combined learner by combining the combined learner and a trained learner selected by the user.

5. The combined learner forming apparatus according to claim 1, wherein
the combined learner forming unit forms the combined learner in which a first learner that is one of the plurality of trained learners and a second learner that is one of the plurality of trained learners and is different from the first learner are connected such that output data of the first learner is directly or indirectly input to the second learner.

6. The combined learner forming apparatus according to claim 5, wherein
the first learner outputs a plurality of pieces of output data, and
a part of the plurality of pieces of output data of the first learner is directly or indirectly input to the second learner, and another part of the plurality of pieces of output data of the first learner is output data of the combined learner.

7. The combined learner forming apparatus according to claim 5 or 6, wherein
the second learner outputs a plurality of pieces of output data, and
a part of the plurality of pieces of output data of the second learner is fed back and input to the first learner.

8. The combined learner forming apparatus according to any one of claims 5 to 7, wherein
the combined learner forming unit forms the combined learner including a transformation model that transforms output data of the first learner and is connected to the second learner such that the transformed output data is input to the second learner.

9. The combined learner forming apparatus according to claim 1, further comprising
a display control unit that causes a display to display a combined learner formation interface capable of determining a combined structure of the combined learner by combining learner icons corresponding to the plurality of trained learners, wherein
the combined learner forming unit determines a combined structure of the combined learner according to an operation of the user on the combined learner formation interface.

10. The combined learner forming apparatus according to claim 9, wherein
the display control unit displays a warning on the combined learner formation interface in a case where input data is not input to at least one of inputs of the trained learners included in the combined learner.

11. The combined learner forming apparatus according to claim 5, further comprising
a display control unit that causes a display to display an input interface for inputting an input name of each of inputs of the plurality of trained learners and an output name of each of outputs of the plurality of trained learners, wherein
in a case where an output name of an output of the first learner input by the user corresponds to an input name of an input of the second learner input by the user, the combined learner forming unit connects the output of the first learner and the input of the second learner.

12. The combined learner forming apparatus according to claim 1, further comprising
an information providing unit that provides the user with at least one of attribute information regarding the trained learners acquired from a person who has caused the trained learners to learn or learning data information regarding learning data obtained when the trained learners have been caused to learn.

13. The combined learner forming apparatus according to claim 12, wherein
the attribute information includes at least one of information regarding preprocessing to be performed on the input data before the input data is input to the trained learners, a program language used for development of the trained learners, or a library used for the development of the trained learners.

14. The combined learner forming apparatus according to claim 1, further comprising
an analysis unit that performs analysis relating to the combined learner, the analysis being performed such that learning processing of each of the trained learners included in the combined learner does not need to be re-executed.

15. The combined learner forming apparatus according to claim 14, wherein
the analysis unit executes at least one of sensitivity analysis for analyzing an effect of each of a plurality of pieces of input data of the combined learner on output data of the combined learner, input optimization processing for searching for input data of the combined learner by a genetic algorithm to obtain optimum output data of the combined learner for the user, or output range search processing for searching for a possible range of the output data of the combined learner based on a plurality of pieces of input data in a predetermined range by Monte Carlo simulation.

16. A combined learner forming program for causing a computer that can access a trained learner group to function as a combined learner forming unit that selects a plurality of trained learners from the trained learner group according to an instruction of a user and combines the plurality of selected trained learners to form a combined learner.

17. A non-transitory computer-readable recording medium storing a combined learner forming program for causing a computer that can access a trained learner group to function as
a combined learner forming unit that selects a plurality of trained learners from the trained learner group according to an instruction of a user and combines the plurality of selected trained learners to form a combined learner.
